# EUROPEAN PATENT APPLICATION

(11) **EP 4 477 486 A1**
(43) Date of publication of application: **18.12.2024**
(21) Application number: 23188733.2
(22) Date of filing: 31.07.2023
(51) Int. Cl.: B60T 17/22, F16D 66/02

(54) **HEAVY VEHICLE BRAKING SYSTEM AND METHOD**

(30) Priority: 14.06.2023 EP 23179290
(71) Applicant: Meritor Heavy Vehicle Braking Systems (UK) Limited, Cwmbran, Gwent NP44 3XU (GB)
(72) Inventor: Cleary, Sean, Cwmbran, NP44 3XU (GB); Thomas, Paul A., Cwmbran, NP44 3XU (GB)
(74) Representative: Whitfield, Jack Stephen

(57) **Abstract**

A method of measuring thickness of a braking component in a heavy vehicle brake assembly of the kind comprising a braking element including friction material having an engaging face, the braking element being configured to be actuated in a braking operation so that the engaging face of the friction material engages a braking surface of the braking component to slow a heavy vehicle. The method comprises: determining when an ultrasonic device comprising an ultrasonic emitter is in an engaged state in contact with the braking surface; when the ultrasonic device is in the engaged state, emitting high-frequency sound waves through the braking component with the ultrasonic emitter and detecting the high-frequency sound waves with an ultrasonic sensor; and calculating a thickness of the braking component based on a time delay between emitting and detecting the high-frequency sound waves.

## Description

### FIELD OF THE INVENTION

The present teachings relate to a method of detecting wear in a heavy vehicle brake assembly, and a heavy vehicle braking system.

### BACKGROUND OF THE INVENTION

There are various methods for detecting wear in brakes for heavy vehicles. Such systems are an important safety feature because they help ensure that braking elements and/or braking surfaces are replaced before they become too worn to provide effective stopping power. This can help prevent accidents and increase the overall safety of the vehicle. Additionally, by detecting wear early, such systems can help reduce maintenance costs by allowing braking elements and/or braking surfaces to be replaced before they cause damage to other parts of the brake system.

In some brakes, a constant wear sensor (CWS) is provided. Known CWS systems measure an internal component of the brake to estimate total friction wear. For example, in a disc brake, a CWS will measure the total rotations of the adjuster mechanism to estimate total frictional wear, which is made up of the wear of the inboard brake pad, the outboard brake pad and the brake rotor.

It would be desirable, however, to provide live measurements of the wear of individual braking elements and braking surfaces as this could help diagnose issues with the brake such as differential wear.

### SUMMARY OF THE INVENTION

An aspect of the invention provides a method of measuring the thickness of a braking component in a heavy vehicle brake assembly of the kind comprising a braking element including friction material having an engaging face, the braking element being configured to be actuated in a braking operation so that the engaging face of the friction material engages a braking surface of the braking component to slow a heavy vehicle. The method comprises:
a) providing an ultrasonic device comprising an ultrasonic emitter, the ultrasonic device being movable between a disengaged state, in which the ultrasonic device is not in contact with the braking surface, and an engaged state, in which the ultrasonic device is in contact with the braking surface;
b) determining when the ultrasonic device is in the engaged state;
c) when it is determined that the ultrasonic device is in the engaged state, emitting high-frequency sound waves through the braking component with the ultrasonic emitter and detecting the high-frequency sound waves with an ultrasonic sensor;
d) measuring a time delay between emitting and detecting the high-frequency sound waves; and
e) calculating a thickness of the braking component based on the time delay.

It will be understood that a braking component (e.g., a rotor of a disc brake) will typically wear at a different rate than the friction material of the braking element (e.g., a brake pad), and so the braking element and braking component may require replacing at different times. This makes it difficult to reliably determine when the braking component is worn using a known CWS system, which only estimates overall wear and not wear of individual braking elements or braking components. Therefore, having such a method which can directly measure a thickness of the braking component provides an advantage over known wear detection systems, in that it allows thickness of the braking component to be determined independently of other parts of the brake assembly (e.g. the braking elements).

It will be understood that when the ultrasonic device is in the engaged state, a running clearance between the braking surface and the ultrasonic device is zero. In other words, there is no void or air gap between the ultrasonic device and the braking surface.

Conversely, it will be understood that when the ultrasonic device is in the disengaged state, a running clearance between the braking surface and the ultrasonic device is greater than zero. In other words, there is a void or air gap between the ultrasonic device and the braking surface.

Optionally, the braking surface and the ultrasonic device comprise complementary engagement faces configured to contact each other. Optionally, the complementary engagement faces are planar surfaces. Optionally, the complementary engagement faces are curved surfaces. Optionally, the complementary engagement faces are complementary convex and concave surfaces (e.g., a convex surface of the ultrasonic device for engaging a complementary concave surface of the braking surface). It will be understood that when the ultrasonic device is in the disengaged state, the ultrasonic device and the braking surface are separated from each other by a void or air gap between the complementary engagement faces. Conversely, when the ultrasonic device is in the engaged state, there is no void or air gap between the complementary engagement faces.

Optionally, the ultrasonic emitter and/or ultrasonic sensor is fixed relative to the braking element. Optionally, the ultrasonic emitter and/or ultrasonic sensor is rigidly fixed relative to the braking element.

In this way, the ultrasonic emitter and/or ultrasonic sensor may be moved towards the braking surface during a braking operation, which facilitates measurement of the braking component thickness.

Optionally, the ultrasonic emitter and/or ultrasonic sensor is fixed to the braking element.

Optionally, the ultrasonic device comprises the ultrasonic sensor. In such embodiments, it will be understood that the high-frequency sound waves emitted by the ultrasonic emitter will be reflected by a transition between different densities (e.g., at a transition between a far side of the braking component opposite to the braking surface and an air gap or opposing braking element). The time delay between emitting and then receiving the reflected sound waves may be used to calculate the thickness.

Optionally, the ultrasonic device comprises a housing for the ultrasonic emitter.

Optionally, the ultrasonic device comprises a spacing member which spaces the ultrasonic emitter from the braking surface when the ultrasonic device is in the engaged state.

Optionally, the spacing member comprises part of a housing for the ultrasonic emitter and/or a sacrificial member.

Optionally, the spacing member is configured to directly contact the braking surface when the ultrasonic device is in the engaged state. In other words, the spacing member defines an engagement face configured to engage a complementary engagement face of the braking surface when the ultrasonic device is in the engaged state.

Optionally, the ultrasonic device comprising the ultrasonic emitter is a first ultrasonic device located on a first side of the braking component, and the ultrasonic sensor is part of a second ultrasonic device which is located on a second side of the braking component opposite to the first side, the braking component comprising first and second braking surfaces on the first and second sides respectively, the second ultrasonic device being movable between a disengaged state, in which the second ultrasonic device is not in contact with the second braking surface, and an engaged state, in which the second ultrasonic device is in contact with the second braking surface, and wherein step b) comprises determining when both the first and second ultrasonic devices are in the engaged state.

In this way, the first and second ultrasonic devices may be used in a "throw and catch" configuration in which the high-frequency sound waves are transmitted directly from the ultrasonic emitter of the first ultrasonic device to the ultrasonic sensor of the second ultrasonic device (i.e. rather than being reflected back to an ultrasonic sensor proximal to the ultrasonic emitter).

Optionally, each of the first and second ultrasonic devices includes both an ultrasonic emitter and an ultrasonic sensor. In this way, the first and second ultrasonic devices can also be used independently of each other (e.g. for measuring wear of the braking elements, as disclosed in European patent application EP23179290.4).

Optionally, the brake assembly is of the kind comprising first and second braking elements each including friction material having an engaging face, the first and second braking elements being configured to be actuated in a braking operation so that the engaging faces engage the respective first and second braking surfaces to slow a heavy vehicle, and wherein the first ultrasonic device is fixed relative to the first braking element and the second ultrasonic device is fixed relative to the second braking element.

In this way, the first and second ultrasonic devices may be moved towards the respective braking surfaces during a braking operation, which facilitates measurement of the braking component thickness.

Optionally, the first ultrasonic device is rigidly fixed relative to the first braking element and the second ultrasonic device is rigidly fixed relative to the second braking element.

Optionally, the first ultrasonic device is fixed to the first braking element and the second ultrasonic device is fixed to the second braking element.

Optionally, step b) comprises determining that the engaging face of the friction material of the or each braking element is in contact with the respective braking surface.

When the ultrasonic emitter and/or ultrasonic sensor is fixed relative to a braking element, determining that the engaging face of the friction material of the or each braking element is in contact with the respective braking surface (i.e. determining when a braking operation is being carried out) may offer a simple means of determining that the or each ultrasonic device is in the engaged state.

Optionally, step b) comprises sending an instruction to a brake control system to actuate the or each braking element to engage the respective braking surface. Sending an instruction to actuate the or each braking element provides a simple means of determining that the engaging face of the friction material of the or each braking element is in contact with the respective braking surface (i.e. determining that a braking operation is being carried out).

Optionally, the brake control system comprises a decoupled brake system. A decoupled brake system provides a means to actuate the or each braking element as instructed.

Optionally, the instruction is sent to the brake control system at start-up of the heavy vehicle. It will be understood that brakes are typically applied at start-up of a heavy vehicle, and so there would be no detrimental effects of instructing a brake to be applied momentarily at start-up while the thickness measurement is taken (e.g. in comparison to instructing brakes to be applied during driving conditions, which could be a safety risk).

Optionally, step b) comprises receiving a signal from a brake pedal sensor and/or a brake control system. Receiving a signal from a brake pedal sensor and/or a brake control system provides a reliable means of determing that the engaging face of the friction material of the or each braking element is in contact with the respective braking surface. For example, the controller may be an ECU associated with a decoupled braking system.

Optionally, step b) comprises measuring pressure in a hydraulic or pneumatic brake line coupled to an actuator for actuating the or each brake element. It will be understood that in hydraulic/pneumatic brake systems, pressure is increased in a hydraulic or pneumatic brake line when a braking operation is performed, in comparison to when no braking operation is performed. Therefore, measuring pressure in such a brake line provides a reliable means of determining that the engaging face of the friction material of the or each braking element is in contact with the respective braking surface.

Optionally, step b) comprises identifying a change in the high-frequency sound waves detected by the ultrasonic sensor. It will be understood that the output of the ultrasonic sensor will differ when the engaging face of the friction material of the or each braking element is in contact with the braking surface compared to not being in contact with the braking surface. Therefore, when the engaging face of the or each braking element changes from not being in contact to being in contact with the braking surface (e.g., as a consequence of a braking operation being performed), there will be a sudden change in the output of the ultrasonic sensor. Such a sudden change may be used to determine that the engaging face of the friction material of the or each braking element is in contact with the respective braking surface.

Optionally, step b) comprises measuring current in an electric circuit coupled to an electric actuator for actuating the or each brake element. It will be understood that in electric brake systems, current in the associated electrical circuit will change when a braking operation is performed. Therefore, measuring current in such an electric circuit provides a reliable means of determining that the engaging face of the friction material of the or each braking element is in contact with the respective braking surface.

Optionally, the method further comprises: f) determining a wear condition of the braking component based on a change in the thickness of the braking component over time. Such a step f), which uses the thickness calculated in step e) allows wear of the braking component to be determined independently of wear of other parts of the brake assembly (e.g. the braking elements).

Optionally, step f) comprises comparing the braking component thickness calculated at step e) with a reference thickness stored in a memory, wherein the reference thickness comprises an initial braking component thickness and/or one or more previously-calculated braking component thicknesses. Such a comparison to a reference thickness stored in memory allows change in thickness over time to be determined, which thus gives an indication of the wear condition of the braking component.

Optionally, the method further comprises audibly and/or visibly indicating the wear condition determined at step f). Audibly and/or visibly indicating the wear condition (e.g., via an indicator located within the cabin of a heavy vehicle) allows a driver or maintenance technician to understand the wear condition of the braking component and take appropriate action when required.

Optionally, the method further comprises recording the wear condition determined at step f) in a memory. Recording the wear condition in a memory allows wear trends to be tracked over time.

Optionally, the method further comprises sending the wear condition determined at step f) to a wear monitoring system. Sending (e.g., transmitting) the wear condition to a wear monitoring system allows appropriate action to be taken by users of the wear monitoring system. For example, where a company runs a fleet of heavy vehicles, the wear conditions of each braking component on each vehicle may be transmitted to a central wear monitoring system which allows the company to schedule maintenance of particular vehicles (i.e., replacement of worn braking components) when required.

Optionally, the method further comprises: g) determining a wear condition of the braking component based on a difference between the calculated thickness of the braking component in comparison to the calculated thickness of another braking component of the same vehicle.

Optionally, step g) comprises determining that the braking component is prematurely wearing when the calculated thickness of the braking component is lower than the calculated thickness of another braking component of the same vehicle by more than a threshold value.

Optionally, the method further comprises: audibly and/or visibly indicating the wear condition determined at step g); and/or recording the wear condition determined at step g) in a memory; and/or sending the wear condition determined at step g) to a wear monitoring system.

Optionally, the method further comprises audibly and/or visibly indicating the braking component thickness calculated at step e). Audibly and/or visibly indicating the braking component thickness (e.g., via an indicator located within the cabin of a heavy vehicle) allows a driver or maintenance technician to understand the thickness of the braking component and take appropriate action when required.

Optionally, the method further comprises recording the braking component thickness calculated at step e) in a memory. Recording the braking component thickness in a memory allows thickness changes to be tracked over time.

Optionally, the method further comprises sending the braking compnent thickness calculated at step e) to a thickness monitoring system. Sending (e.g., transmitting) the braking component thickness to a thickness monitoring system allows appropriate action to be taken by users of the thickness monitoring system. For example, where a company runs a fleet of heavy vehicles, the thickness of each braking component on each vehicle may be transmitted to a central thickness monitoring system which allows the company to schedule maintenance of particular vehicles (i.e., replacement of braking components which have become too thin) when required.

Optionally, the method further comprises determining a temperature of the brake assembly and using the determined temperature of the brake assembly to calibrate the calculation of step e). It will be understood that ultrasonic sensor readings may vary with temperature. Therefore, by determining temperature and using this to calibrate the calculation of step e) an accurate measurement of the thickness of the braking component can be obtained.

Optionally, the temperature of the brake assembly may be determined using a temperature sensor and/or by monitoring operating conditions of the brake assembly (e.g., to estimate a temperature based on duration of braking operations).

Optionally, the method further comprises determining whether a temperature of the brake assembly is within a predetermined temperature range, wherein step c) is only performed when it is determined that the temperature of the brake assembly is within the predetermined temperature range. It will be understood that ultrasonic sensor readings may vary with temperature. Therefore, by determining whether a temperature of the brake assembly is within a predetermined temperature range (e.g., a temperature range for which the calculation of step e) has been calibrated), and only performing step c) in this temperature range, an accurate measurement of the thickness of the braking component can be obtained.

Optionally, determining whether the temperature of the brake assembly is within the predetermined temperature range comprises determining when a predetermined amount of time since the last braking operation has elapsed. It will be understood that the temperature of the braking assembly increases during a braking operation due to frictional forces, and that this temperature will gradually then reduce towards atmospheric temperature after the braking operation has finished. Therefore, determining when a predetermined amount of time since the last braking operation has elapsed provides a means of determining whether the temperature is in the predetermined range (e.g. a range close to the range of typical atmospheric conditions).

Optionally, determining whether the temperature of the brake assembly is within the predetermined temperature range comprises determining when the heavy vehicle has been started up after a period of shut down. When the heavy vehicle has been started up after a period of shut down, the temperature of the brake assembly will be close to atmospheric conditions. Further, it will be understood that there will be relatively low fluctuations in temperature between different start-up events due to different atmospheric conditions, in comparison to temperatures reached during prolonged braking operations. Therefore, determining a start up of the heavy vehicle provides an alternative means of determining whether the temperature is within the predetermined range.

Optionally, determining whether the temperature of the brake assembly is within the predetermined temperature range comprises measuring or inferring the temperature of the brake assembly using a temperature sensor. Using a temperature sensor provides a measured temperature, which can then easily be used to determine whether the temperature of the brake assembly is within the predetermined range.

A further aspect of the teachings provides a method of determining a braking condition of a heavy vehicle brake assembly of the kind comprising a braking element including friction material having an engaging face, the braking element being configured to be actuated in a braking operation so that the engaging face of the friction material engages a braking surface of the braking component to slow a heavy vehicle, the method comprising:
a) providing an ultrasonic device comprising an ultrasonic emitter, the ultrasonic device being movable between a disengaged state, in which the ultrasonic device is not in contact with the braking surface, and an engaged state, in which the ultrasonic device is in contact with the braking surface;
b) emitting high-frequency sound waves through the braking component with the ultrasonic emitter and detecting the high-frequency sound waves with an ultrasonic sensor;
c) determining a braking condition of the heavy vehicle brake assembly by identifying a change in the high-frequency sound waves detected by the ultrasonic sensor.

Optionally, the ultrasonic device is fixed relative to the braking element, and step c) comprises determining when the braking element is in contact with the braking surface of the braking component by identifying an increase in the amplitude of the high-frequency sound waves detected by the ultrasonic sensor.

Optionally, the method further comprises a step of determining that the braking element is dragging when it is determined at step c) that the braking element is in contact with the braking surface, and that the heavy vehicle brake assembly is not performing a braking operation.

A further aspect of the teachings provides a heavy vehicle braking system comprising:
a heavy vehicle brake assembly comprising a braking component and a braking element including friction material having an engaging face, the braking element being configured to be actuated in a braking operation so that the engaging face of the friction material engages a braking surface of the braking component to slow a heavy vehicle;
an ultrasonic device comprising an ultrasonic emitter, the ultrasonic device being movable between a disengaged state, in which the ultrasonic device is not in contact with the braking surface, and an engaged state, in which the ultrasonic device is in contact with the braking surface;
an ultrasonic sensor; and
a controller configured to:
   a) instruct the ultrasonic emitter to emit high-frequency sound waves through the braking component to be detected by the ultrasonic sensor, and receive a signal from the ultrasonic sensor indicative of the detected high-frequency sound waves; and
   b) determine a braking condition of the heavy vehicle brake assembly by identifying a change in the high-frequency sound waves detected by the ultrasonic sensor.

Optionally, the ultrasonic device is fixed relative to the braking element, and wherein the controller is configured at step b) to determine when the braking element is in contact with the braking surface of the braking component by identifying an increase in the amplitude of the high-frequency sound waves detected by the ultrasonic sensor.

Optionally, the controller is configured to determine that the braking element is dragging when it is determined at step b) that the braking element is in contact with the braking surface, and that the heavy vehicle brake assembly is not performing a braking operation.

A further aspect of the teachings provides a heavy vehicle braking system comprising:
a heavy vehicle brake assembly comprising a braking component and a braking element including friction material having an engaging face, the braking element being configured to be actuated in a braking operation so that the engaging face of the friction material engages a braking surface of the braking component to slow a heavy vehicle;
an ultrasonic device comprising an ultrasonic emitter, the ultrasonic device being movable between a disengaged state, in which the ultrasonic device is not in contact with the braking surface, and an engaged state, in which the ultrasonic device is in contact with the braking surface;
an ultrasonic sensor; and
a controller configured to:
   a) determine when the ultrasonic device is in the engaged state;
   b) when it is determined that the ultrasonic device is in the engaged state, instruct the ultrasonic emitter to emit high-frequency sound waves through the braking component to be detected by the ultrasonic sensor, and receive a signal from the ultrasonic sensor indicative of the detected high-frequency sound waves;
   c) measure a time delay between emitting and detecting the high-frequency sound waves; and
   d) calculate a thickness of the braking component based on the time delay.

Such a heavy vehicle braking system provides the benefits of the method outlined above.

Optionally, the controller is further configured to: e) determine a wear condition of the braking component based on a change in the thickness of the braking component over time. In other words, the controller automatically determines a wear condition (e.g. "worn and needs replacing soon", or "partially worn but does not need replacing"), without anybody having to directly monitor the braking component thickness. Alternatively, the controller may only calculate thickness and the wear condition may be determined manually (e.g. by a maintenance technician) based on the calculated thickness. Optionally, the controller is configured at step e) to compare the braking component thickness calculated at step d) with a reference thickness stored in a memory, wherein the reference thickness comprises an initial braking component thickness and/or one or more previously-calculated braking component thicknesses. Optionally, the heavy vehicle braking system comprises the memory.

Optionally, the ultrasonic emitter and/or ultrasonic sensor is fixed relative to the braking element. In this way, the ultrasonic emitter and/or ultrasonic sensor may be moved towards the braking surface during a braking operation, which facilitates measurement of the braking component thickness.

Optionally, the ultrasonic emitter and/or ultrasonic sensor is fixed to the braking element.

Optionally, the ultrasonic device comprises the ultrasonic sensor. In such embodiments, it will be understood that the high-frequency sound waves emitted by the ultrasonic emitter will be reflected by a transition between different densities (e.g. at a transition between a far side of the braking component opposite to the braking surface and an air gap or opposing braking element). The time delay between emitting and then receiving the reflected sound waves may be used by the controller to calculate the thickness.

Optionally, the ultrasonic device comprises a housing for the ultrasonic emitter.

Optionally, the ultrasonic device comprises a spacing member which spaces the ultrasonic emitter from the braking surface when the ultrasonic device is in the engaged state.

Optionally, the spacing member comprises part of a housing for the ultrasonic emitter and/or a sacrificial member.

Optionally, the spacing member is configured to directly contact the braking surface when the ultrasonic device is in the engaged state. In other words, the spacing member defines an engagement face configured to engage a complementary engagement face of the braking surface when the ultrasonic device is in the engaged state.

Optionally, the ultrasonic device comprising the ultrasonic emitter is a first ultrasonic device located on a first side of the braking component and the ultrasonic sensor is part of a second ultrasonic device which is located on a second side of the braking component opposite to the first side, the braking component comprising first and second braking surfaces on the first and second sides respectively, the second ultrasonic device being movable between a disengaged state, in which the second ultrasonic device is not in contact with the second braking surface, and an engaged state, in which the second ultrasonic device is in contact with the second braking surface, and wherein the controller is configured at step a) to determine when both the first and second ultrasonic devices are in the engaged state.

In this way, the first and second ultrasonic devices may be used in a "throw and catch" configuration in which the high-frequency sound waves are transmitted directly from the ultrasonic emitter of the first ultrasonic device to the ultrasonic sensor of the second ultrasonic device (i.e. rather than being reflected back to a ultrasonic sensor proximal to the ultrasonic emitter).

Optionally, each of the first and second ultrasonic devices includes both an ultrasonic emitter and an ultrasonic sensor. In this way, the controller can also use the first and second ultrasonic devices independently of each other (e.g. for measuring wear of the braking elements, as disclosed in European patent application EP23179290.4).

Optionally, the heavy vehicle brake assembly comprises first and second braking elements each including friction material having an engaging face, the first and second braking elements being configured to be actuated in a braking operation so that the engaging faces engage the respective first and second braking surfaces to slow a heavy vehicle, and wherein the first ultrasonic device is fixed relative to the first braking element and the second ultrasonic device is fixed relative to the second braking element.

In this way, the first and second ultrasonic devices may be moved towards the respective braking surfaces during a braking operation, which facilitates measurement of the braking component thickness.

Optionally, the first ultrasonic device is fixed to the first braking element and the second ultrasonic device is fixed to the second braking element.

Optionally, the controller is configured at step a) to determine that the engaging face of the friction material of the or each braking element is in contact with the respective braking surface.

Optionally, the controller is configured at step a) to send an instruction to a brake control system to actuate the or each braking element to engage the respective braking surface. Optionally, the brake control system comprises a decoupled brake system. Optionally, the controller is configured to send the instruction to the brake control system at start-up of the heavy vehicle.

Optionally, the controller is configured at step a) to receive a signal from a brake pedal sensor and/or a brake control system.

Optionally, the controller is configured at step a) to measure pressure in a hydraulic or pneumatic brake line coupled to the or each brake element. Optionally, the controller is configured to measure the pressure with a pressure sensor. Optionally, the heavy vehicle braking system comprises the pressure sensor. Optionally, the pressure sensor is part of an external system (e.g. a decoupled brake system).

Optionally, the controller is configured at step a) to identify a change in the high-frequency sound waves detected by the ultrasonic sensor.

Optionally, the controller is configured at step a) to measure current in an electric circuit coupled to an electric actuator for actuating the or each brake element .

Optionally, the controller is mounted on the heavy vehicle brake assembly. In this way, the heavy vehicle braking system may be provided as a single unit.

Optionally, the the controller is configured to determine a temperature of the brake assembly and to use the determined temperature of the brake assembly to calibrate the calculation of step d).

Optionally, the controller is configured to determine a temperature of the brake assembly based on a signal received from a temperature sensor, and/or by monitoring operating conditions of the brake assembly (e.g., based on signals of a brake control system or other brakeing operation sensors). Optionally, the heavy vehicle braking system comprises the temperature sensor.

Optionally, the controller is configured to determine whether a temperature of the brake assembly is within a predetermined temperature range, and to only perform step b) when it is determined that the temperature of the brake assembly is within the predetermined temperature range.

Optionally, the controller is configured to determine whether the temperature of the brake assembly is within the predetermined temperature range by determining when a predetermined amount of time since the last braking operation has elapsed.

Optionally, the controller is configured to determine whether the temperature of the brake assembly is within the predetermined temperature range by determining when the heavy vehicle has been started up after a period of shut down.

Optionally, the controller is configured to determine whether the temperature of the brake assembly is within the predetermined temperature range by measuring or inferring the temperature of the brake assembly based on a signal from a temperature sensor. Optionally, the temperature sensor is part of the heavy vehicle braking system.

Optionally, the controller is configured to send a signal to an audible and/or visible indicator, the signal corresponding to the braking component thickness calculated at step d) and/or the wear condition determined at step e). Optionally, the heavy vehicle braking system comprises the audible and/or visible indicator. Optionally, the indicator is part of an external system.

Optionally, the controller is configured to record in a memory the braking component thickness calculated at step d) and/or the wear condition determined at step e). Optionally, the heavy vehicle braking system comprises the memory. Optionally, the memory is part of an external system.

Optionally, the controller is configured to send a signal to a wear monitoring system, the signal corresponding to the braking component thickness calculated at step d) and/or the wear condition determined at step e). Optionally, the heavy vehicle braking system comprises the wear monitoring system. Optionally, the wear monitoring system is part of an external system. Optionally, the signal is sent to the wear monitoring system via a transmitter (e.g. a wireless transmitter). Optionally, the heavy vehicle braking system comprises the transmitter.

A further aspect of the teachings provides a disc brake comprising a heavy vehicle braking system as disclosed herein, wherein the braking surface is a rotor rotationally fixed relative to a vehicle wheel and the or each braking element is a brake pad having friction material, optionally wherein the brake pad has a backplate and the friction material is fixed to the backplate.

### BRIEF DESCRIPTION OF THE DRAWINGS

Embodiments of the invention will now be described with reference to the accompanying drawings, in which:
Figure 1 is a perspective view of a heavy vehicle disc brake;
Figure 2 is a heavy vehicle braking system including a controller and the heavy vehicle disc brake of Figure 1 shown in cross-section along plane 2-2;

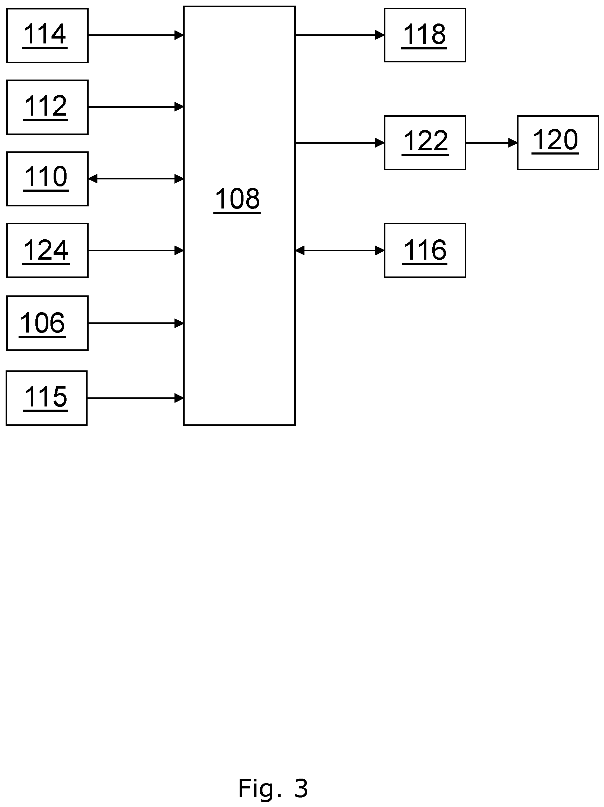

Figure 3 is a schematic diagram of the controller of Figure 2;
Figure 4 is an enlarged view of a brake pad and rotor of the heavy vehicle disc brake of Figures 1 and 2;
Figure 5A is a perspective view of an ultrasonic device of the heavy vehicle braking system of Figure 2;
Figure 5B is a cross-sectional view of the ultrasonic device of Figure 5A through the plane 5B-5B;and
Figure 6 is a cross-sectional view of a heavy vehicle drum brake;
Figure 7 is a block diagram of a method of detecting wear in a heavy vehicle brake assembly; and
Figure 8 is a block diagram of a method of determining a brake condition of a heavy vehicle brake assembly.

### DETAILED DESCRIPTION OF EMBODIMENT(S)

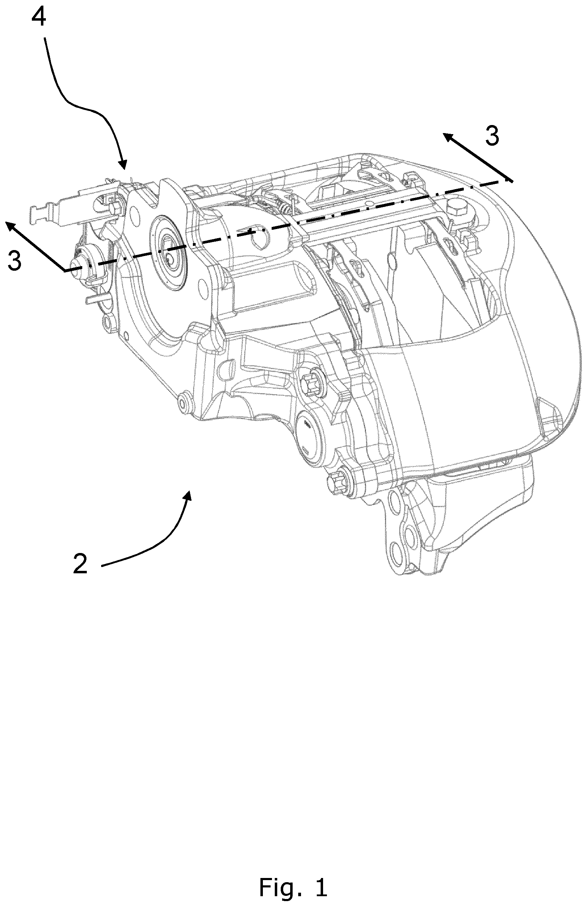

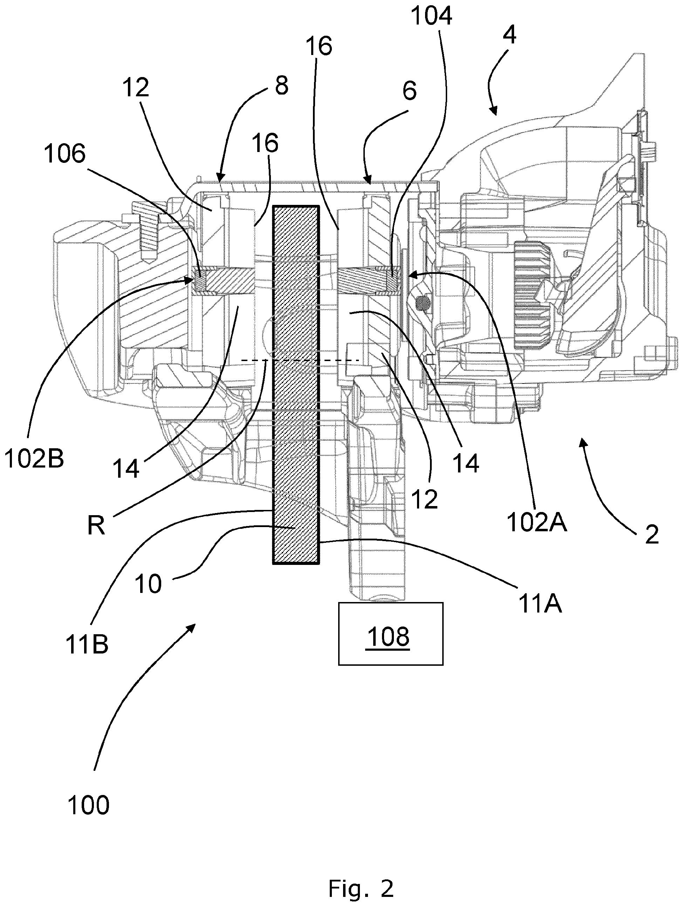

Figures 1 and 2 show a heavy vehicle brake assembly which, in this embodiment, is a disc brake 2. The function of such a disc brake 2 is well known so will not be described in detail but, briefly, a brake carrier locates braking elements 6, 8 to face first and second braking surfaces 11A, 11B of a braking component. In this case, the braking component is a rotor 10 that is rotationally fixed to a vehicle wheel, the first and second braking surfaces 11A, 11B are opposite sides of the rotor 10, and the braking elements are an inboard brake pad 6 and an outboard brake pad 8. An actuating arrangement 4 engages the inboard brake pad 6 to urge it towards the rotor 10 and a reaction force slides a caliper relative to the brake carrier in order to urge the outboard brake pad 8 towards the rotor 10. The inboard brake pad 6 and the outboard brake pad 8 each include a backplate 12 that locates friction material 14. The friction material 14 has an engaging face 16 that is arranged to face the rotor 10 such that during a braking operation, when the inboard brake pad 6 and outboard brake pad 8 are moved towards the rotor 10, the engaging faces 16 of the inboard brake pad 6 and the outboard brake pad 8 engage the opposite braking surfaces 11A, 11B of the rotor 10 to slow the vehicle.

Over time, the friction material 14 of each of the inboard brake pad 6 and the outboard brake pad 8 will wear. Similarly, the rotor 10 will also wear over time. In other words, a thickness of the rotor 10 (e.g., as measured in a direction parallel to an axis of rotation R of the rotor 10) will be reduced over time. However, the rotor 10 will not wear at the same rate as the friction material 14, and so it would be beneficial to know exactly when the rotor 10 should be replaced (e.g., when the thickness of the rotor 10 is below a threshold thickness).

In the embodiment of Figure 2, the heavy vehicle disc brake 2 is part of a heavy vehicle braking system 100 which can be used to measure the thickness of the rotor 10. The heavy vehicle braking system 100 also includes a first ultrasonic device 102A having an ultrasonic emitter 104 located on a first side of the rotor 10. The first ultrasonic device 102A is movable between a disengaged state (as illustrated in Figure 2), in which the ultrasonic device 102A is not in contact with the first braking surface 11A of the rotor 10, and an engaged state (not shown), in which the ultrasonic device 102 is in contact with the first braking surface 11A of the rotor 10.

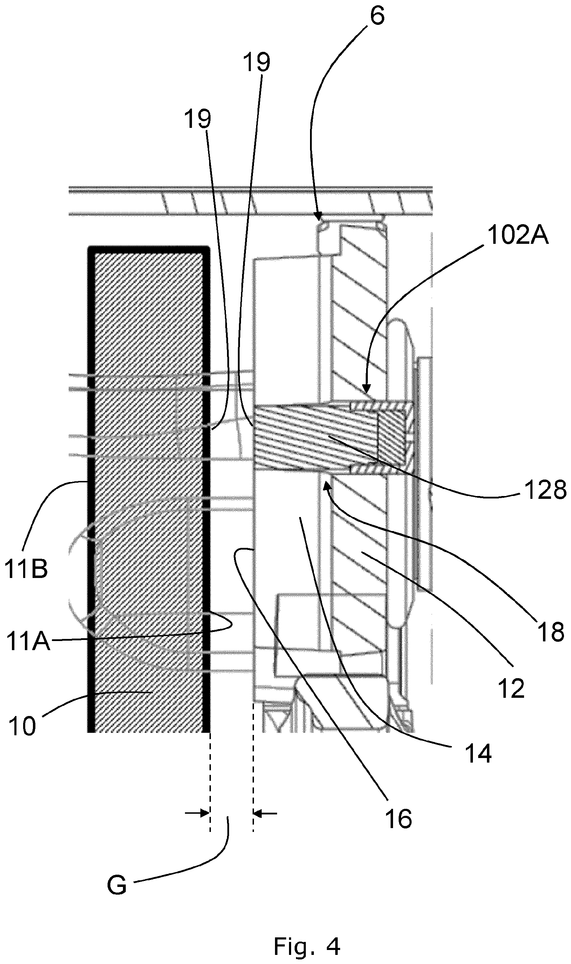

It will be understood that when the first ultrasonic device 102A is in the engaged state, a running clearance G (best illustrated in Figure 4) between the first braking surface 11A and the first ultrasonic device 102A is zero. In other words, there is no void or air gap between the first ultrasonic device 102A and the first braking surface 11A. Conversely, it will be understood that when the first ultrasonic device 102A is in the disengaged state, the running clearance G between the first braking surface 11A and the first ultrasonic device 102A is greater than zero, as illustrated in Figure 4. In other words, there is a void or air gap between the first ultrasonic device 102A and the first braking surface 11A. For example, the running clearance/air gap G between the first ultrasonic device 102A and the first braking surface 11A may define a distance of greater than 0.5 mm (e.g., greater than 1mm, e.g., greater than 2mm, e.g., greater than 4mm, e.g. greater than 6mm, e.g., greater than 8mm, e.g., greater than 10mm, e.g., greater than 15mm, e.g. greater than 20mm), when the first ultrasonic device 102A is in the disengaged state.

As best illustrated in Figure 4, the first braking surface 11A and the first ultrasonic device 102A define complementary engagement faces 19 configured to contact each other. In the illustrated disc brake embodiment, the complementary engagement faces 19 are planar surfaces. In other embodiments, for example drum brake embodiments, the complementary engagement faces 19 are curved surfaces (e.g., a convex surface of the first ultrasonic device 102A for engaging a complementary concave surface of the first braking surface 11A). It will be understood that when the first ultrasonic device 102A is in the disengaged state (as illustrated in Figures 2 and 4), the first ultrasonic device 102A and the first braking surface 11A are separated from each other by a void or air gap between the complementary engagement faces 19. Conversely, when the first ultrasonic device 102A is in the engaged state, there is no void or air gap between the complementary engagement faces 19 (i.e., the complementary engagement faces 19 are in abutment with each other).

As illustrated in Figure 2, the heavy vehicle braking system 100 also has an ultrasonic sensor 106 which, in the illustrated embodiment is part of a second ultrasonic device 102B which is located on a second side of the rotor 10 opposite to the first side. The second ultrasonic device 102B is movable between a disengaged state (as illustrated in Figure 2), in which the second ultrasonic device 102B is not in contact with the second braking surface 11B of the rotor 10, and an engaged state (not shown), in which the second ultrasonic device 102B is in contact with the second braking surface 11B of the rotor 10. Similar to the running clearance G annotated on Figure 4, the running clearance/air gap G between the second ultrasonic device 102B and the second braking surface 11B will be greater than zero when the second ultrasonic device 102B is in the disengaged state, and zero when the second ultrasonic device 102B is in the engaged state. For example, the running clearance/air gap G between the second ultrasonic device 102B and the second braking surface 11B may define a distance of greater than 0.5 mm (e.g., greater than 1mm, e.g., greater than 2mm, e.g., greater than 4mm, e.g. greater than 6mm, e.g., greater than 8mm, e.g., greater than 10mm, e.g., greater than 15mm, e.g. greater than 20mm, when the second ultrasonic device 102B is in the disengaged state.

The first and second ultrasonic devices 102A, 102B are arranged so that the ultrasonic sensor 106 of the second ultrasonic device 102B is positioned in a path of high-frequency sound waves emitted by the ultrasonic emitter 104 of the first ultrasonic device 102A (e.g., by virtue of the first and second ultrasonic devices 102A, 102B being opposite each other and coaxially aligned). In this way, the first and second ultrasonic devices 102A, 102B may be used in a "throw and catch" configuration in which high-frequency sound waves transmitted from the ultrasonic emitter 104 of the first ultrasonic device 102A are transmitted directly to the ultrasonic sensor 106 of the second ultrasonic device 102B.

In alternative embodiments, the first ultrasonic device 102A has the ultrasonic emitter 104 and the ultrasonic sensor 106. In such embodiments, it will be understood that the high-frequency sound waves emitted by the ultrasonic emitter 104 will be reflected by a transition between different densities (e.g., at a transition between a far side of the rotor 10 opposite to the first ultrasonic device 102A and an air gap or the opposing brake pad 8. The reflected high-frequency sound waves may then be detected by the ultrasonic sensor 106. It will be understood that in such embodiments, the second ultrasonic device 102B may be omitted. Such an alternative configuration may be used, for example, in a heavy vehicle drum brake in which the braking component is a drum rotationally fixed relative to a vehicle wheel, the braking surface is an inner surface of the drum, and the braking element is a brake shoe having brake linings of friction material. In such embodiments, it will be understood that the drum is only engaged by brake shoes on one side, and so having a single ultrasonic device 102A which is configured to emit and sense reflected high-frequency sound waves from one side of the drum is particularly beneficial.

In some embodiments, each of the first and second ultrasonic devices 102A, 102B includes both an ultrasonic emitter 104 and an ultrasonic sensor 106. In this way, the first and second ultrasonic devices 102A, 102B can also be used independently of each other (e.g., for measuring wear of the braking elements 6, 8, as disclosed in European patent application EP23179290.4 which is incorporated herein by reference).

The heavy vehicle braking system 100 also has a controller 108. In some embodiments, the controller 108 is mounted to the heavy vehicle disc brake 2, so that the heavy vehicle braking system 100 can be provided as a single unit. For example, the controller 108 may be mounted to the brake carrier or any other suitable surface of the disc brake 2.

The controller 108 is configured to determine when the ultrasonic devices 102A, 102B are in the engaged state. In other words, the controller 108 is configured to determine when there is no air gap or void between the ultrasonic emitter 104 and ultrasonic sensor 106, which is important for obtaining an accurate reading because high-frequency sound waves do not travel reliably through an air gap/void.

When it is determined that the ultrasonic devices 102A, 102B are in the engaged state, the controller 108 is configured to instruct the ultrasonic emitter 104 of the first ultrasonic device 102A to emit high-frequency sound waves through the rotor 10 to be detected by the ultrasonic sensor 106 of the second ultrasonic device 102B, and to receive a signal from the ultrasonic sensor 106 indicative of the detected high-frequency sound waves. It will be understood that in embodiments where the first ultrasonic device 102A includes the ultrasonic sensor 106 as well as the ultrasonic emitter 104 (e.g., in embodiments where the second ultrasonic device 102B is omitted), the controller 108 will only be configured to determine when the first ultrasonic device 102A is in the engaged state before instructing the ultrasonic emitter 104 to emit high-frequency sound waves.

The controller 108 is configured to measure a time delay between emitting and detecting the high-frequency sound waves, and to calculate a thickness of the rotor 10 based on the time delay. The thickness of the rotor 10 may be calculated using an algorithm that is based upon known formulas. For example, the thickness calculation may be proportional to the velocity of the high-frequency sound waves multiplied by the measured time delay. Other factors may be accounted for by the algorithm, such as the distance between the ultrasonic emitter 104 and the engagement face 19 of the first ultrasonic device 102A, and the distance between the ultrasonic sensor 106 and the engagement face 19 of the second ultrasonic device 102B.

In some embodiments, the controller 108 is configured to determine a temperature of the disc brake 2 (e.g., a temperature of the brake carrier, brake pads 6, 8, rotor 10 and/or any other part of the disc brake 2), and to use the determined temperature to calibrate the thickness calculation. It will be understood that the output of the ultrasonic sensor 106 may vary with temperature, and so by using the determined temperature to calibrate the thickness calculation, an accurate measurement of the thickness of the rotor 10 can be obtained.

The controller 108 may be configured to determine a temperature of the disc brake 2 based on a signal received from a temperature sensor 124 (e.g., a temperature sensor 124 which is part of the heavy vehicle braking system 100). Alternatively, the controller 108 is configured to determine a temperature of the disc brake 2 by monitoring operating conditions of the disc brake 2. For example, a temperature may be estimated based on a duration of braking operations using the principle that temperature will increase during a deceleration of the heavy vehicle using the disc brake 2. The controller 108 may monitor operating conditions of the disc brake using signals received from a brake control system 110 or other braking operation sensors.

In some embodiments, the controller 108 is configured to determine whether a temperature of the disc brake 2 is within a predetermined temperature range, and to only instruct the ultrasonic emitter 104 to emit high-frequency sound waves through the rotor 10 to be detected by the ultrasonic sensor 106 when it is determined that the temperature of the disc brake 2 is within the predetermined temperature range. It will be understood that the output from the ultrasonic sensor 106 may vary with temperature. Therefore, by determining whether a temperature of the disc brake 2 is within a predetermined temperature range (e.g., a temperature range for which the rotor thickness calculation has been calibrated), and only emitting/detecting/calculating thickness in this temperature range, an accurate measurement of the thickness of the rootor 10 can be obtained.

The controller 108 may be configured to determine whether a temperature of the disc brake 2 is within the predetermined temperature range by: determining when a predetermined amount of time since the last braking operation has elapsed; determining when the heavy vehicle has been started up after a period of shut down; and/or measuring or inferring the temperature of the disc brake 2 based on a signal from a temperature sensor 124 (e.g., a temperature sensor 124 which is part of the heavy vehicle braking system 100).

The controller 108 may be configured to record the calculated thickness of the rotor 10 in a memory 116 (e.g., a memory 116 which is part of the heavy vehicle braking system 100, or part of an external system). This allows thickness trends to be tracked over time.

The controller 108 may be configured to send a signal corresponding to the calculated thickness of the rotor 10 to an audible and/or visible indicator 118 (e.g., an audible and/or visible indicator 118 which is part of the heavy vehicle braking system 100, or part of an external system). In some embodiments, the indicator 118 may be a warning light and/or alarm on a dashboard of a heavy vehicle. In some embodiments, the indicator 118 may be a warning light and/or alarm on an external surface of a body of a heavy vehicle. Such an indicator 118 allows a driver or maintenance technician to understand the thickness of the rotor 10 and take appropriate action when required.

The controller 108 may be configured to send a signal corresponding to the calculated thickness of the rotor 10 to a monitoring system 120 (e.g., a thickness and/or wear monitoring system). The monitoring system 120 may be part of the heavy vehicle braking system 100 or at least part of an external system. For example, the monitoring system 120 may be a centralised system for monitoring the thickness of each rotor 10 on each vehicle of a fleet of heavy vehicles. The signal may be sent to the monitoring system 120 via a transmitter 122 (e.g., a wireless transmitter).

In some embodiments, the controller 108 is further configured to determine a wear condition of the rotor 10 based on a change in the thickness of the rotor 10 over time. In other words, the controller 108 automatically determines a wear condition (e.g., "worn and needs replacing soon", or "partially worn but does not need replacing yet"), without a user having to manually monitor the thickness of the rotor 10. In such embodiments, the controller 108 may determine that the rotor 10 is worn and needs replacing when the calculated thickness of the rotor 10 is below a threshold thickness.

In some embodiments, the controller 108 is configured to determine a wear condition of the rotor 10 by comparing the calculated thickness of the rotor 10 with a reference thickness stored in a memory 116. The memory 116 may be part of the heavy vehicle braking system 100, or part of a separate system (e.g., an independent thickness monitoring system). The reference thickness may be an initial rotor thickness and/or one or more previously-calculated rotor thicknesses. For example, when a difference between the calculated thickness and the reference thickness exceeds a threshold delta value, it may be determined that the rotor 10 is worn and needs replacing.

In some embodiments, the controller 108 is configured to determine a wear condition of the rotor 10 based on a difference between the calculated thickness of the rotor 10 in comparison to the calculated thickness of another rotor of the same vehicle. For example, the controller 108 may determine that the rotor 10 is prematurely wearing/worn when the calculated thickness of the rotor is lower than the calculated thickness of another rotor of the same vehicle by more than a threshold value.

The controller 108 may be configured to record the determined wear condition of the rotor 10 in a memory 116 (e.g., a memory 116 which is part of the heavy vehicle braking system 100, or part of an external system). This allows wear trends to be tracked over time.

The controller 108 may be configured to send a signal corresponding to the determined wear condition of the rotor 10 to an audible and/or visible indicator 118 (e.g., an audible and/or visible indicator 118 which is part of the heavy vehicle braking system 100, or part of an external system). In some embodiments, the indicator 118 may be a warning light and/or alarm on a dashboard of a heavy vehicle. In some embodiments, the indicator 118 may be a warning light and/or alarm on an external surface of a body of a heavy vehicle. Such an indicator 118 allows a driver or maintenance technician to understand the wear condition of the rotor 10 and take appropriate action when required.

The controller 108 may be configured to send a signal corresponding the determined wear condition of the rotor 10 to a monitoring system 120 (e.g., a wear monitoring system). The monitoring system 120 may be part of the heavy vehicle braking system 100 or at least part of an external system. For example, the monitoring system 120 may be a centralised system for monitoring the wear conditions of each rotor 10 on each vehicle of a fleet of heavy vehicles. The signal may be sent to the monitoring system 120 via a transmitter 122 (e.g., a wireless transmitter).

In other embodiments, the controller 108 is not configured to determine a wear condition of the rotor 10. Instead, the wear condition may be determined manually or by an external system (e.g., an external monitoring system 120) based on the calculated thickness of the rotor 10.

In the illustrated embodiment, the first and second ultrasonic devices 102A, 102B (and the corresponding ultrasonic emitter 104 and sensor 106) are fixed (e.g., rigidly fixed) relative to the respective brake pads 6, 8. In this way, the first and second ultrasonic devices 102A, 102B may be moved towards the respective braking surfaces 11A, 11B during a braking operation, which facilitates measurement of the thickness of the rotor 10.

In the illustrated embodiment, the first and second ultrasonic devices 102A, 102B (and the corresponding ultrasonic emitter 104 and sensor 106) are fixed directly to the respective brake pads 6, 8 by being located in a central region spaced apart from circumferential and radial edges of the brake pad 6, 8. In this embodiment, this central region comprises a recess 18 that extends through the friction material 14. In this embodiment, the recess 18 extends through the entire depth of the friction material in the axial direction, i.e. parallel to a central axis about which the rotor 10 rotates. In this embodiment, the recess 18 is of a circular cross-section to correspond to a cylindrical ultrasonic device 102A, 102B, but it could have any suitable cross-sectional shape. The recess 18 has been used in previous brake pads to locate a known pad wear warning indicator device, so the ultrasonic devices 102A, 102B could be retrofitted to existing brake pads 6, 8 in this location.

It will be understood that in embodiments where the first and second ultrasonic devices 102A, 102B are fixed relative to the respective brake pads 6, 8, the controller 108 may determine that the ultrasonic devices 102A, 102B are in the engaged state by determining that the engaging faces 16 of the friction material 14 of the brake pads 6, 8 are in contact with the respective braking surfaces 11A, 11B of the rotor 10.

In some embodiments, the controller 108 may determine that the engaging faces 16 of the friction material 14 of the brake pads 6, 8 are in contact with the respective braking surfaces 11A, 11B of the rotor 10 by sending an instruction to a brake control system 110 (e.g., a decoupled brake system) to actuate the brake pads 6, 8 to engage the braking surfaces 11A, 11B. For example, the controller 108 may send the instruction to the brake control system 110 at start-up of the heavy vehicle (when brakes are typically applied anyway).

In some embodiments, the controller 108 may determine that the engaging faces 16 of the friction material 14 of the brake pads 6, 8 are in contact with the respective braking surfaces 11A, 11B of the rotor 10 by receiving a signal from a brake pedal sensor 112 and/or a decoupled brake system 110.

In some embodiments, the controller 108 may determine that the engaging faces 16 of the friction material 14 of the brake pads 6, 8 are in contact with the respective braking surfaces 11A, 11B of the rotor 10 by measuring pressure in a hydraulic or pneumatic brake line coupled to the actuating arrangement 4 (e.g., using a pressure sensor 114 which is part of the heavy vehicle braking system 100 or part of an external system, such as the decoupled brake system 110).

In some embodiments, the controller 108 may determine that the engaging faces 16 of the friction material 14 of the brake pads 6, 8 are in contact with the respective braking surfaces 11A, 11B of the rotor 10 by identifying a change in the high-frequency sound waves detected by the ultrasonic sensor 106. For example, a sudden change in the detected high-frequency sound waves may occur when the first and second ultrasonic devices 102A, 102B are moved to the engaged state to close a void/air gap between the braking surfaces 11A, 11B and the first and second ultrasonic devices 102A, 102B.

In some embodiments, the controller 108 may determine that the engaging faces 16 of the friction material 14 of the brake pads 6, 8 are in contact with the respective braking surfaces 11A, 11B of the rotor 10 by measuring current in an electric circuit coupled to the actuating arrangement 4 (e.g. using any suitable current detecting sensor or arrangement 115).

It will be appreciated that the controller 108 may determine that the engaging faces 16 of the friction material 14 of the brake pads 6, 8 are in contact with the respective braking surfaces 11A, 11B of the rotor 10 using more than one of the methods outlined above (e.g., at least two independent methods to avoid "false positives" if a single sensor is faulty).

In some embodiments, the ultrasonic devices 102A, 102B and components thereof are not fixed relative to the brake pads 6, 8. The ultrasonic devices 102A, 102B could be provided in any suitable location, as long as they can be moved between the engaged and disengaged states. For example, the first and/or second ultrasonic device 102A, 102B may be part of a mobile probe that is used to manually measure the thickness of the rotor 10 by placing the probe in contact with the rotor 10 to put the respective ultrasonic device(s) 102A, 102B in the engaged state. It will be understood that in such embodiments, the controller 108 may not be configured to determine when the first and/or second ultrasonic device 102A, 102B is in the engaged state before instructing the ultrasonic emitter 104 emit high-frequency sound waves through the rotor 10. Instead, the operator of the probe may determine the engaged state manually (e.g., by sight or haptic feedback) and then actuate a user input (e.g., a button) to start the thickness calculation. The controller 108 may then be configured, on receipt of a signal from the user input, to carry out the same steps of: instructing the ultrasonic emitter 104 to emit high-frequency sound waves through the rotor 10; receiving a signal from the ultrasonic sensor 106 indicative of the detected high-frequency sound waves; measuring a time delay between emitting and detecting the high-frequency sound waves; and calculating a thickness of the rotor 10 based on the time delay.

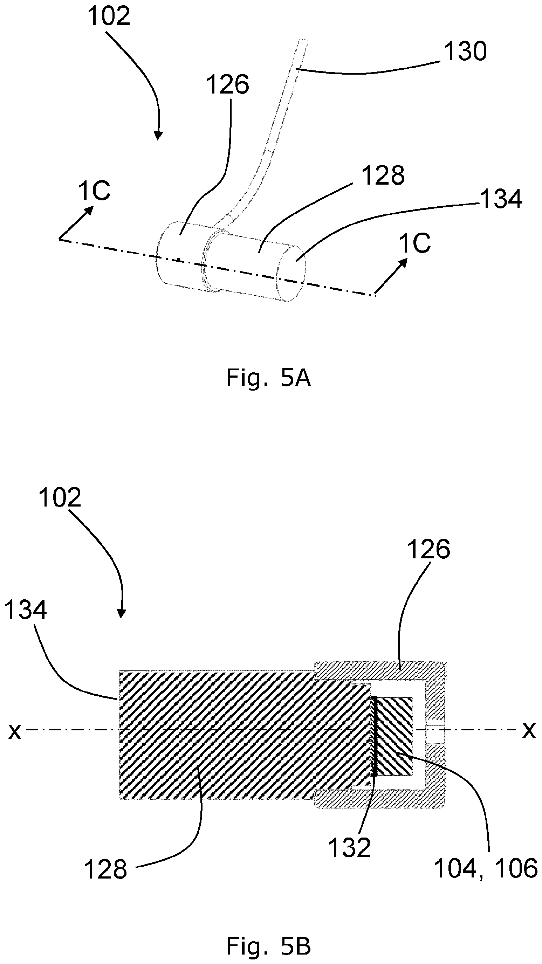

Referring now to Figures 5A and 5B, an ultrasonic device 102 is shown in more detail. It will be understood that the first and/or second ultrasonic device 102A, 102B may be constructed in this way. The ultrasonic device 102 has a housing 126 for an ultrasonic emitter 104 and/or an ultrasonic sensor 106. The ultrasonic device 102 also has a spacing member 128 which spaces the ultrasonic emitter 104 and the ultrasonic sensor 106 from the respective braking surface 11A, 11B when the ultrasonic device 102 is in an engaged state. The spacing member 128 may include part of the housing 126, and/or a sacrificial member (as will be described in more detail below).

The ultrasonic emitter 104 is any suitable emitter for producing high-frequency ultrasonic sound waves, and the ultrasonic sensor 106 is any suitable sensor. Examples of suitable ultrasonic emitters and sensors 104, 106 are piezoelectric transducers or electromagnetic acoustic transducers (EMAT). In some embodiments, the ultrasonic emitter and sensor 104, 106 may be provided by the same component (e.g., the same transducer). In such embodiments, it will be understood that the transducer will emit high-frequency sound waves, and also detect high-frequency sound waves (e.g., reflections of the emitted high-frequency sound waves and/or high-frequency sound waves emitted by a different ultrasonic device).

The high-frequency sound waves detected by the ultrasonic sensor 106 can be transmitted by a connecting wire 130, or wirelessly in other embodiments, to a suitable controller (e.g., the controller 108 described above).

In the illustrated embodiment, the spacing member 128 is a sacrificial member which is elongate with a longitudinal axis x-x. In this embodiment, the sacrificial member 128 is fixed to the housing 126 with a suitable adhesive, but in other embodiments the sacrificial member 128 and the housing 126 could each have corresponding threads and be screwed to one another. Further, the ultrasonic emitter and sensor 104, 106 are located within the housing 126 so the sacrificial member 128, housing 126 and ultrasonic emitter and sensor 104, 106 can all be provided as a single ultrasonic device 102. Typically, the remainder of the housing 126 can be filled with an epoxy resin or similar to locate the ultrasonic emitter and sensor 104, 106. It will be appreciated that in other embodiments the components could be all be provided separately, as long as the sacrificial member 128 is arranged between the ultrasonic emitter and sensor 104, 106 and the respective braking surface 11A, 11B of the disc brake 2, such that the sound waves from the ultrasonic emitter 104 pass through the sacrificial member 128 and, optionally, are reflected back so they can be detected by the ultrasonic sensor 106.

A couplant 132 may be provided between the ultrasonic emitter and sensor 104, 106 and an end of the sacrificial member 128 so that there is no air gap between the ultrasonic emitter and sensor 104, 106 and the sacrificial member 128. Thus, the couplant 132 acts as a bridge to help ensure the sound waves travel reliably into the sacrificial member 128 and the signal is not negatively affected by travelling through air. The couplant 132 may be a solid disc shape made from any suitable material, or a viscous liquid, for example a silicon-based or glycol-based gel.

The sacrificial member 128 is formed of a homogenous material as this helps to ensure that the sound waves from the ultrasonic emitter 104 pass through the sacrificial member 128 easily and can be detected without significant interference affecting the signal. Any suitable material could be used, but ideally the material of the sacrificial member 128 should be heat resistant such that it can handle the high temperatures reached in a brake and have a similar compressibility as the friction material 14 of the brake pads 6, 8. An example of a suitable material would be a thermoplastic such as Vespec^{®}.

At a free end of the sacrificial member 128 is an engaging face 134. The engaging face 134 is substantially perpendicular to the longitudinal axis x-x. As illustrated in Figures 2 and 4, when installed in a brake, the sacrificial member 128 is arranged with its longitudinal axis x-x extending in a direction perpendicular to the engaging face 16 of the friction material 14 of the respective brake pad 6, 8. This helps to ensure that the engaging face 134 of the sacrificial member 128 member faces the respective braking surface 11A, 11B and is flush with the engaging face 16 of the friction material 14 of the respective brake pad 6, 8.

The brake pad 6, 8 and the corresponding sacrificial member 128 are configured to actuate together during the braking operation so that the engaging face 134 of the sacrificial member 128 also engages the rotor 10. Therefore, as the friction material 14 wears, the sacrificial member 128 will wear at the same rate. Accordingly, the sound waves emitted by the ultrasonic emitter 104 through the sacrificial member 128 will reflect back to the ultrasonic sensor 106 as they contact the engaging face 134 of the sacrificial member 128, due to the interface between the material of the sacrificial member 128 and the air surrounding the sacrificial member 128 and/or the rotor 10. The reflected sound waves are detected by the ultrasonic sensor 106 in order to provide data indicating the time delay between the transmitting and receiving of the sound waves, which can indicate the amount of material remaining in the sacrificial member 128. This data can then be used to determine the wear of the friction material 14, as it will correspond to the wear of the sacrificial member 128, due to them being flush.

This calculation of the amount of material remaining in the sacrificial member 128 may be used by the controller 108 described in relation to Figures 2 and 4 above, in order to calculate the thickness of the rotor 10. For example, the controller 108 may calculate a total distance between the ultrasonic emitter of the first ultrasonic device 102A and the ultrasonic sensor 106 of the second ultrasonic device 102B, then substract the length of material remaining in the sacrificial members 128 of the first and second ultrasonic devices 102A, 102B to determine the thickness of the rotor 10.

In some embodiments, the controller 108 may be configured to determine a braking condition of the heavy vehicle brake assembly 2 by identifying a change in the high-frequency sound waves detected by the ultrasonic sensor 106 of the first and/or second ultrasonic devices 102A, 102B. For example, the controller 108 may be configured to determine when one or both of the brake pads 6, 8 is in contact with the corresponding braking surface 11A, 11B by identifying a change (e.g., increase) in the amplitude of high-frequency sound waves detected by the respective ultrasonic sensor 106. This may be used to determine that a braking operation is being performed (e.g., when both brake pads 6, 8 are in contact with the corresponding braking surface 11A, 11B). Alternatively, this may be used to determine a fault with the heavy vehicle brake assembly 2, such as a dragging brake pad 6, 8 (e.g., when only one brake pad 6, 8 is in contact with the corresponding braking surface 11A, 11B).

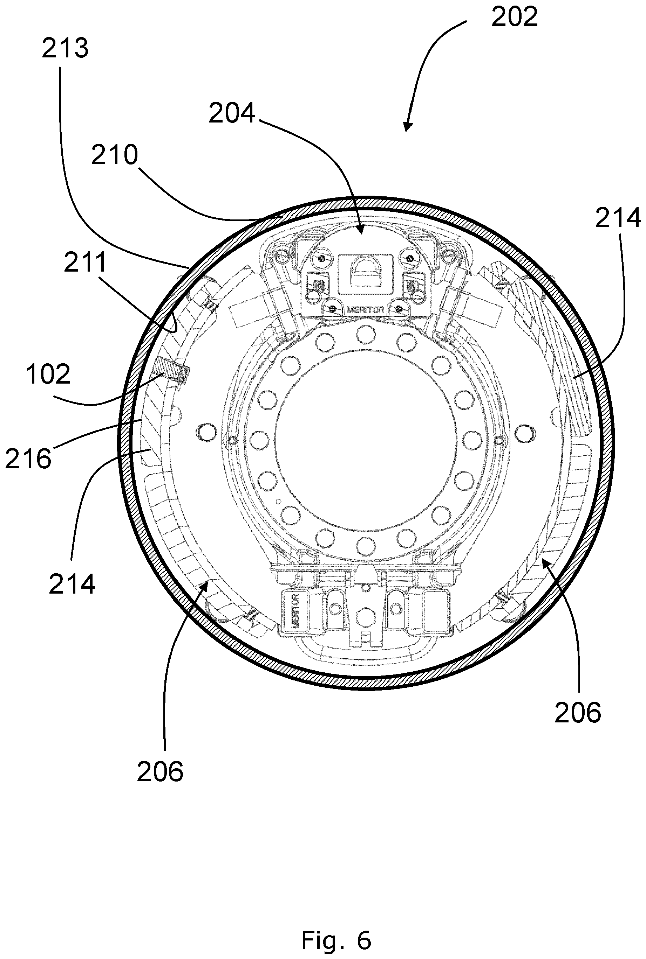

Figure 6 shows an alternative heavy vehicle brake. In this embodiment, a heavy vehicle drum brake 202 is shown, with an actuating arrangement 204. In this embodiment, the braking elements are brake shoes 206 each having friction material 214. The operation of such a drum brake 202 is known, so will not be described in much detail but, briefly, during a braking operation the actuating arrangement 204 actuates the brake shoes 206 in a radially-outward direction such that the friction material 214 of each brake shoe engages a braking surface 211, which is an inner surface of a drum 210 that is rotationally fixed relative to a vehicle wheel, in order to slow the vehicle. An ultrasonic device 102 (e.g., of the kind illustrated in Figures 5A and 5B) is provided facing the braking surface 211 and is flush with an engaging face 216 of the friction material 214. The ultrasonic device 102 may have an ultrasonic emitter and ultrasonic sensor, and the thickness of the drum 210 may be determined by detecting high-frequency sound waves which are emitted by the ultrasonic emitter and then reflected by a material transition at an outer surface 213 of the drum 210 back to the ultrasonic sensor (e.g., by measuring a time delay and using this to calculate thickness as described in detail above).

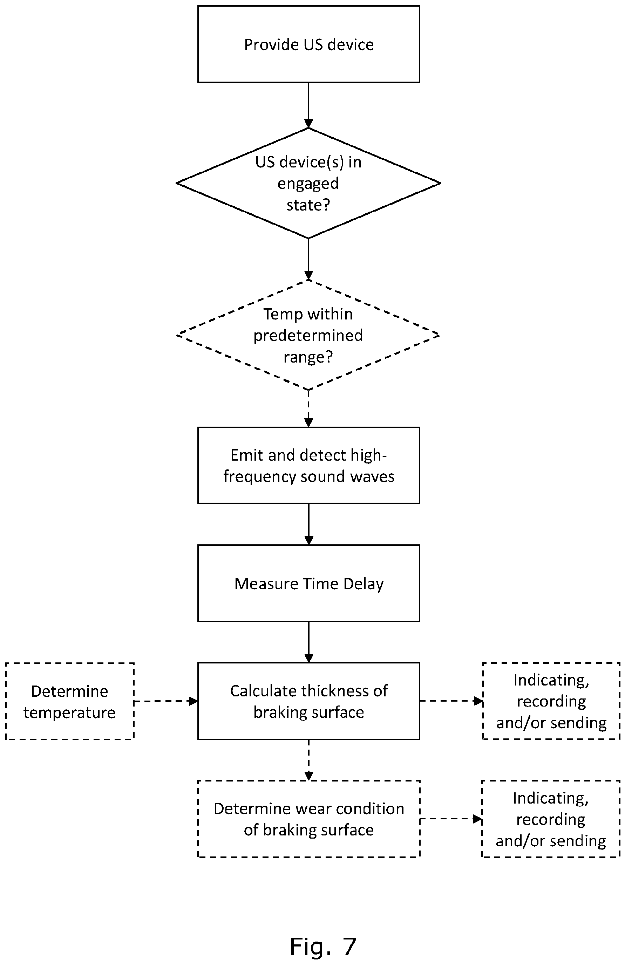

Referring now to Figure 7, a method of measuring thickness of a braking component (e.g. a rotor 10 or drum 210) in a heavy vehicle brake assembly (e.g., a heavy vehicle disc brake 2 or heavy vehicle drum brake 202) is illustrated as a flow chart. Examples of how the method can be implemented in a heavy vehicle braking system 100 having an controller 108 have been detailed in the description above. However, to summarise, the method comprises the steps outlined below.

The method comprises providing an ultrasonic device comprising an ultrasonic emitter, the ultrasonic device being movable between a disengaged state, in which the ultrasonic device is not in contact with a braking surface of the braking component, and an engaged state, in which the ultrasonic device is in contact with the braking surface (e.g., providing the ultrasonic device 102 outlined above, a mobile probe comprising an ultrasonic emitter, or any other suitable ultrasonic device).

The method further comprises determing when the ultrasonic device is in the engaged state (e.g., using one of the methods carried out by the controller 108 in the description above, or via any other suitable means, such as a manual inspection by an operator).

The method further comprises, when it is determined that the ultrasonic device is in the engaged state, emitting high-frequency sound waves through the braking component with the ultrasonic emitter and detecting the high-frequency sound waves with an ultrasonic sensor.

The method further comprises measuring a time delay between emitting and detecting the high-frequency sound waves and calculating a thickness of the braking component based on the time delay.

The method further comprises the optional step (indicated by dashed lines) of determining determining a wear condition of the braking component (e.g., based on a change in the thickness of the braking component over time, and/or comparison with the thickness of another braking component of the same vehicle).

The method further comprises the optional steps (indicated by dashed lines) of determining a temperature of the brake assembly and using the determined temperature of the brake assembly to calibrate the thickness calculation; and/or determining whether a temperature of the brake assembly is within a predetermined temperature range and only emitting/detecting high-frequency sound waves when the temperature of the brake assembly is within the predetermined temperature range.

The method further comprises the optional step (indicated by dashed lines) of indicating the calculated thickness, recording the calculated thickness in a memory and/or sending the calculated thickness to a thickness monitoring system.

The method further comprises the optional step (indicated by dashed lines) of indicating the determined wear condition, recording the determined wear condition in a memory and/or sending the determined wear condition to a wear monitoring system.

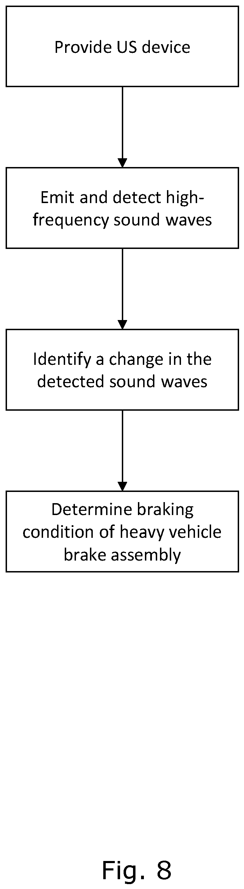

Referring now to Figure 8, a method of determining a braking condition of a heavy vehicle brake assembly (e.g., a heavy vehicle disc brake 2 or heavy vehicle drum brake 202) is illustrated as a flow chart. Examples of how the method can be implemented in a heavy vehicle braking system 100 having an controller 108 have been detailed in the description above. However, to summarise, the method comprises the steps outlined below.

The method comprises providing an ultrasonic device comprising an ultrasonic emitter, the ultrasonic device being movable between a disengaged state, in which the ultrasonic device is not in contact with a braking surface of the braking component, and an engaged state, in which the ultrasonic device is in contact with the braking surface (e.g., providing the ultrasonic device 102 outlined above).

The method further comprises emitting high-frequency sound waves through the braking component with the ultrasonic emitter and detecting the high-frequency sound waves with an ultrasonic sensor.

The method further comprises determining a braking condition of the heavy vehicle brake assembly by identifying a change in the high-frequency sound waves detected by the ultrasonic sensor. For example, this may comprise determining when the braking element is in contact with the braking surface of the braking component by identifying an increase in the amplitude of the high-frequency sound waves detected by the ultrasonic sensor. This may be used to determine that the braking element is dragging when it is determined that the heavy vehicle brake assembly is not performing a braking operation.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

It should also be noted that whilst the appended claims set out particular combinations of features described above, the scope of the present disclosure is not limited to the particular combinations hereafter claimed, but instead extends to encompass any combination of features herein disclosed.

## Claims

1. A method of measuring thickness of a braking component in a heavy vehicle brake assembly of the kind comprising a braking element including friction material having an engaging face, the braking element being configured to be actuated in a braking operation so that the engaging face of the friction material engages a braking surface of the braking component to slow a heavy vehicle, the method comprising:
a) providing an ultrasonic device comprising an ultrasonic emitter, the ultrasonic device being movable between a disengaged state, in which the ultrasonic device is not in contact with the braking surface, and an engaged state, in which the ultrasonic device is in contact with the braking surface;
b) determining when the ultrasonic device is in the engaged state;
c) when it is determined that the ultrasonic device is in the engaged state, emitting high-frequency sound waves through the braking component with the ultrasonic emitter and detecting the high-frequency sound waves with an ultrasonic sensor;
d) measuring a time delay between emitting and detecting the high-frequency sound waves; and
e) calculating a thickness of the braking component based on the time delay.

2. The method of claim 1, wherein the ultrasonic device comprising the ultrasonic emitter is a first ultrasonic device located on a first side of the braking component, and the ultrasonic sensor is part of a second ultrasonic device which is located on a second side of the braking component opposite to the first side, the braking component comprising first and second braking surfaces on the first and second sides respectively, the second ultrasonic device being movable between a disengaged state, in which the second ultrasonic device is not in contact with the second braking surface, and an engaged state, in which the second ultrasonic device is in contact with the second braking surface, and wherein step b) comprises determining when both the first and second ultrasonic devices are in the engaged state.

3. The method of claim 2, wherein the brake assembly is of the kind comprising first and second braking elements each including friction material having an engaging face, the first and second braking elements being configured to be actuated in a braking operation so that the engaging faces engage the respective first and second braking surfaces to slow a heavy vehicle, and wherein the first ultrasonic device is fixed relative to the first braking element and the second ultrasonic device is fixed relative to the second braking element.

4. The method of any preceding claim, wherein step b) comprises determining that the engaging face of the friction material of the or each braking element is in contact with the respective braking surface.

5. The method of claim 4, wherein step b) comprises sending an instruction to a brake control system to actuate the or each braking element to engage the respective braking surface; optionally, wherein the brake control system comprises a decoupled brake system; and/or optionally, wherein the instruction is sent to the brake control system at start-up of the heavy vehicle.

6. The method of claim 4 or 5, wherein step b) comprises:
receiving a signal from a brake pedal sensor and/or a brake control system; and/or
measuring pressure in a hydraulic or pneumatic brake line coupled to an actuator for actuating the or each brake element; and/or
identifying a change in the high-frequency sound waves detected by the ultrasonic sensor; and/or
measuring current in an electric circuit coupled to an electric actuator for actuating the or each brake element.

7. The method of any preceding claim, further comprising:
f) determining a wear condition of the braking component based on a change in the thickness of the braking component over time;
optionally, wherein step f) comprises comparing the braking component thickness calculated at step e) with a reference thickness stored in a memory, wherein the reference thickness comprises an initial braking component thickness and/or one or more previously-calculated braking component thicknesses; and/or
optionally, wherein the method further comprises:
audibly and/or visibly indicating the wear condition determined at step f); and/or
recording the wear condition determined at step f) in a memory; and/or
sending the wear condition determined at step f) to a wear monitoring system.

8. The method of any preceding claim, further comprising:
audibly and/or visibly indicating the braking component thickness calculated at step e); and/or
recording the braking component thickness calculated at step e) in a memory; and/or
sending the braking compnent thickness calculated at step e) to a thickness monitoring system.

9. The method of any preceding claim, further comprising determining a temperature of the brake assembly and using the determined temperature of the brake assembly to calibrate the calculation of step e).

10. The method of any of claims 1 to 8, further comprising determining whether a temperature of the brake assembly is within a predetermined temperature range, wherein step c) is only performed when it is determined that the temperature of the brake assembly is within the predetermined temperature range; optionally, wherein determining whether the temperature of the brake assembly is within the predetermined temperature range comprises:
determining when a predetermined amount of time since the last braking operation has elapsed;
determining when the heavy vehicle has been started up after a period of shut down; and/or
measuring or inferring the temperature of the brake assembly using a temperature sensor.

11. A heavy vehicle braking system comprising:
a heavy vehicle brake assembly comprising a braking component and a braking element including friction material having an engaging face, the braking element being configured to be actuated in a braking operation so that the engaging face of the friction material engages a braking surface of the braking component to slow a heavy vehicle;
an ultrasonic device comprising an ultrasonic emitter, the ultrasonic device being movable between a disengaged state, in which the ultrasonic device is not in contact with the braking surface, and an engaged state, in which the ultrasonic device is in contact with the braking surface;
an ultrasonic sensor; and
a controller configured to:
e) determine when the ultrasonic device is in the engaged state;
f) when it is determined that the ultrasonic device is in the engaged state, instruct the ultrasonic emitter to emit high-frequency sound waves through the braking component to be detected by the ultrasonic sensor, and receive a signal from the ultrasonic sensor indicative of the detected high-frequency sound waves;
g) measure a time delay between emitting and detecting the high-frequency sound waves; and
h) calculate a thickness of the braking component based on the time delay.

12. The heavy vehicle braking system of claim 11, wherein the ultrasonic device comprising the ultrasonic emitter is a first ultrasonic device located on a first side of the braking component and the ultrasonic sensor is part of a second ultrasonic device which is located on a second side of the braking component opposite to the first side, the braking component comprising first and second braking surfaces on the first and second sides respectively, the second ultrasonic device being movable between a disengaged state, in which the second ultrasonic device is not in contact with the second braking surface, and an engaged state, in which the second ultrasonic device is in contact with the second braking surface, and wherein the controller is configured at step a) to determine when both the first and second ultrasonic devices are in the engaged state.

13. The heavy vehicle braking system of claim 12, wherein the heavy vehicle brake assembly comprises first and second braking elements each including friction material having an engaging face, the first and second braking elements being configured to be actuated in a braking operation so that the engaging faces engage the respective first and second braking surfaces to slow a heavy vehicle, and wherein the first ultrasonic device is fixed relative to the first braking element and the second ultrasonic device is fixed relative to the second braking element.

14. The heavy vehicle braking system of any of claims 11 to 13, wherein the controller is mounted on the heavy vehicle brake assembly.

15. A disc brake comprising the heavy vehicle braking system of any of claims 11 to 14, wherein the braking surface is a rotor rotationally fixed relative to a vehicle wheel and/or each braking element is a brake pad having friction material, optionally wherein the brake pad has a backplate and the friction material is fixed to the backplate.
